# EUROPÄISCHE PATENTSCHRIFT

(11) **EP 2 092 142 B1**
(45) Veröffentlichungstag und Bekanntmachung des Hinweises auf die Patenterteilung: **06.12.2017**
(21) Anmeldenummer: 07855991.1
(22) Anmeldetag: 20.12.2007
(51) Int. Cl.: E05B 79/02, E05B 85/04

(54) **VORRICHTUNG ZUR AUFNAHME DER EINSTELLELEMENTE**
APPARATUS FOR RECEIVING ADJUSTING ELEMENTS
DISPOSITIF POUR RECEVOIR DES ÉLÉMENTS DE RÉGLAGE

(30) Priorität: 21.12.2006 CZ 20060818
(43) Veröffentlichungstag der Anmeldung: 26.08.2009
(73) Patentinhaber: Skoda Auto A.S., 293 60 Mladá Boleslav (CZ)
(72) Erfinder: STACH, Ivan, 514 01 Jilemnice (CZ)
(86) Internationale Anmeldenummer: PCT/CZ2007/000116
(87) Internationale Veröffentlichungsnummer: WO 2008/074270

(56) Entgegenhaltungen:
- EP-A- 1 055 787
- DE-A1- 3 026 174
- JP-A- 2005 067 536
- US-A1- 2004 056 516
- US-A1- 2004 119 300

## Beschreibung

Die Erfindung bezieht sich auf eine Vorrichtung zur Aufnahme von Einstellelementen, bei denen es aus technologischen oder anderen Gründen notwendig ist, ihre Position zu ändern, wie z. B. bei Türschlossklinken von Fahrzeugen usw..

Gegenwärtig ist es bei der Schlösser-Montage von Fahrzeugen notwendig, eine gegenseitige richtige Position der Klinke, platziert an der Fahrzeugkarosserie, und des Türschlosses, aufgenommen auf der Tür (Heckklappe) des Fahrzeugs, auf eine Art und Weise zu sichern, dass die Türschlossaussparung auf die Mitte des Klinkenbügels einklinkt.

Zu diesem Zweck werden zur Einstellung der richtigen Position der Klinke verstellbare Gewindeplatten verwendet, worauf es in der Regel zwei Öffnungen mit Gewinden (bzw. zwei Muttern angeschweißt oder eingepresst) gibt und die auf die Innenstruktur der Karosserie aufgenommen werden. Die Karosserie ist an der Stelle der Klinkenaufnahme mit zwei Öffnungen koaxial mit zwei Öffnungen in der Schlossklinke, über welche die Klinke mittels Schrauben über die Karosserie zur Gewindeplatte aufgenommen wird, versehen.

Aus der Patenschrift DE 3026174 C2 ist eine Gewindeplatte bekannt, die aus einem Aufhahmeteil besteht, der an die Karosseriesäule angeschweißt wird. An den Aufnahmeteil werden zwei Teile/Arme angeschlossen, die eine plastische Verformung ermöglichen. Dies wird bei eigener Einstellung der Gewindeplatte bzw. Klinke verwendet. Von Nachteil ist bei dieser Konfiguration die Tatsache, dass sie eine Bewegung nur in einer Richtung +x; -x und Rotation +*φ*; -*φ* ermöglicht. Beide Bewegungen erfolgen zwangsläufig, d. h., dass bei Herausschwingen die Bewegung in der Achse x nicht mehr möglich ist. Von Nachteil ist es auch, dass diese Lösung ein kleines Abweichen von der neutralen-/Ausgangsposition nicht ermöglicht, da als erster einer der Arme/ irgendeiner von den Armen, der federn und in die Ausgangsposition zurückkommen wird, sich biegt. Gleichzeitig erfordert die Versetzung (Justierung) in die Endmontageposition die Anwendung größerer Kräfte, was bedeuten wird, dass es nicht möglich ist, die Versetzung (Justierung) von Hand nur mit dem Klinkenbügel vorzunehmen, sondern dass es notwendig ist, irgendwelche Werkzeuge einzusetzen, was ein höheres Beschädigungsrisiko von einzelnen Teilen und auch höhere Gemeinkosten darstellt.

Aus der US 2004/119300 A1 ist eine gattungsgemäße Vorrichtung zur Aufnahme von Einstellelementen bzw. Klinken bekannt. Die Vorrichtung umfasst eine Klammer oder eine Steckplatte mit einem Gegenbefestigungsteil, einem Schweißteil sowie mit Gliedern, die diese beiden Platten verbinden. Da diese Glieder elastisch sind, kann das Gegenbefestigungsteil relativ zum Schweißteil eingestellt werden, um die Position der Öffnungen und damit die Gegenparts der Befestigungsschrauben der Klinke einzustellen. Diese Glieder bzw. Deformationselemente weisen eine konstante, sich nicht verändernde Stärke über ihre Länge auf.

Ausgehend hiervon liegt der Erfindung die Aufgabe zugrunde, eine derartige Vorrichtung so weiterzubilden, dass die Eigenschaften innerhalb der Deformationszone genau einstellbar sind.

Die oben genannte Aufgabe wird erfindungsgemäß durch die Vorrichtung gemäß dem Anspruch 1 beseitigt. Sie besteht aus einer Gewindeplatte, die mit einer Grundplatte mit einem formbaren einstellbaren Mechanismus verbunden ist, wobei die Gewindeplatte mit Öffnungen mit Gewinden (bzw. angeschweißten oder eingepressten Muttem), die koaxial zu Öffnungen in dem Einstellelement (z. B. einer Schlossklinke) und dem Rahmen (z. B. Karosserie) stehen, versehen ist, wobei der Einstellmechanismus mindestens durch einen Oberarm, einen Unterarm und drei Gelenken gebildet wird, wobei der Oberarm durch ein Obergelenk mit der Gewindeplatte und mit einem Gelenk zum Unterarm sowie der Unterarm durch ein Untergelenk mit der Grundplatte verbunden werden. An der Stelle der Gelenke gibt es gegenüber dem Unter- und Oberarm sowie der Gewinde- und Grundplatte eine lokale Materialschwächung (Querschnitt), welche eine geführte plastische Verformung (programmgemäß) nur in den Gelenken ermöglicht.

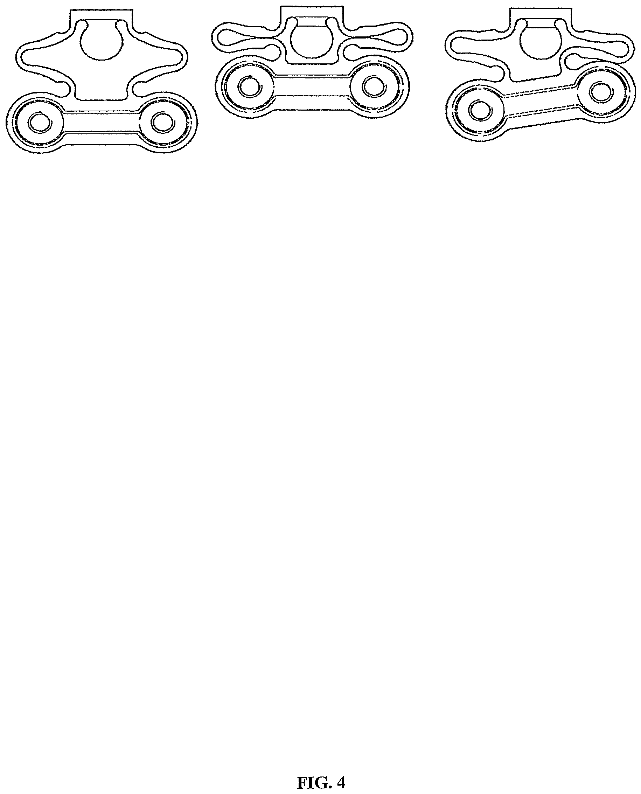

Die Erfindung wird näher mittels beiliegenden Fig. erklärt, wobei auf Fig. 1 ein Karosserieschnitt dargestellt wird, Fig. 2 eine Skizze der Gewindeplatte, Fig. 3 eine axonometrische Ansicht der Gewindeplatte und Fig. 4 eine Ansicht der Gewindeplatte in verschiedenen Einstellpositionen zeigt.

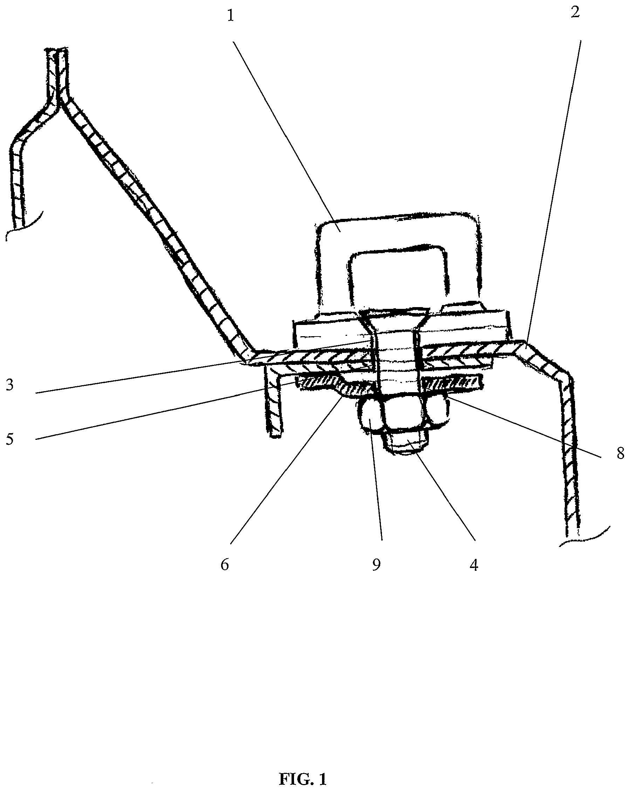

Wie aus Fig. 1 ersichtlich ist, wurde die Vorrichtung zur Aufnahme der Einstellelemente 6 zur Einstellung einer Schlossklinke verwendet. Auf Fig. 1 gibt es die eigene Klinke 1, deren Bügel in die Schlossaussparung einklinkt, aufgenommen in der Seitentür des Fahrzeugs (nicht dargestellt), und eine Vorrichtung (Gewindeplatte) befestigt an der Karosseriesäule 2. Die Klinke 1 ist mit zwei Aufnahmeöffnungen 3, durch welche sie mittels Befestigungsschrauben 4 an der Karosseriesäule 2 befestigt ist, ausgestattet. Zu diesem Zweck ist sie mit zwei durchgehenden Löchern 5 versehen. Von der anderen Seite der Karosseriesäule 2 wird die Vorrichtung zur Aufnahme des Einstellelements 6 befestigt, die mittels Befestigungsschrauben 4 mit der Klinke 1 verbunden und gleichzeitig an der Karosseriesäule 2 befestigt wird.

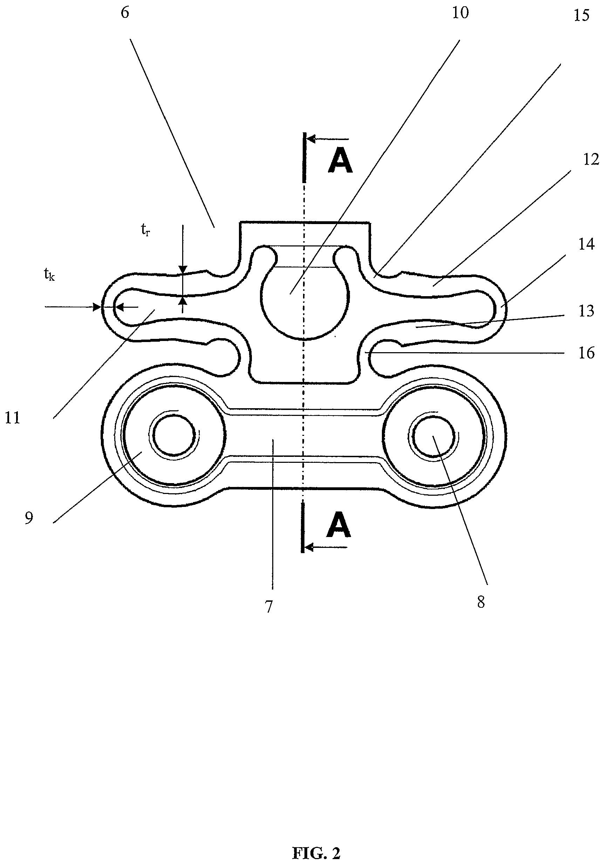

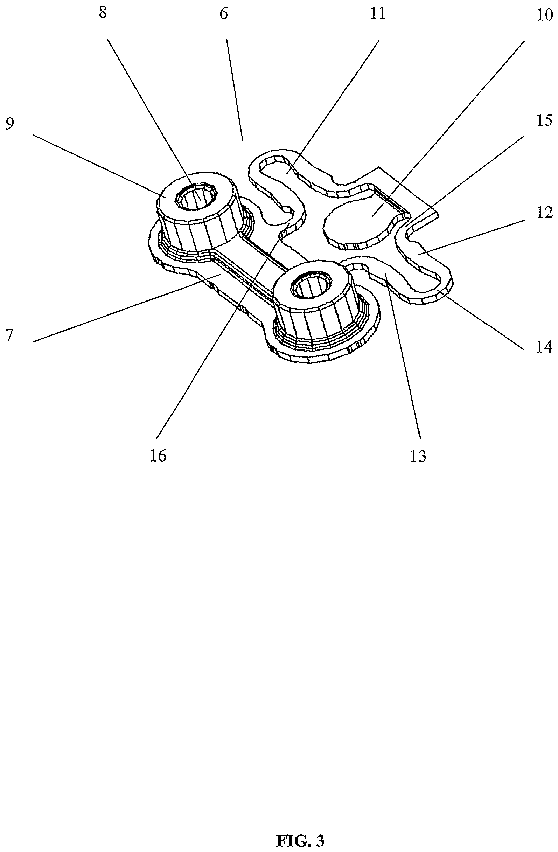

Auf den Fig. 2 und 3 ist die eigentliche Vorrichtung zur Aufnahme des Einstellelements 6 dargestellt, die aus einer Gewindeplatte 7 mit Gewindebohrungen 8 (z. B. mit angeschweißten oder eingepressten Muttem 9) und ferner einer Grundplatte 10, mit der die Vorrichtung zur Aufnahme des Einstellelements 6 an der Karosseriesäule 2 befestigt ist, besteht. Als geeignete Art und Weise der Aufnahme erscheint in diesem Falle ein Anschweißen an der Karosseriesäule 2. Die Grundplatte 10 und die Gewindeplatte 7 sind durch einen formbaren einstellbaren Mechanismus 11 miteinander verbunden, der mindestens einen Unterarm 12 und einen Oberarm 13 hat. Sie sind mittels eines Gelenks 14 miteinander verbunden. Der Unterarm 12 ist mittels des Untergelenks 15 mit der Grundplatte 10 und der Oberarm 13 mittels des Obergelenks 16 mit der Gewindeplatte 7 verbunden. Die Gelenkstärke tₖ ist kleiner als die Armstärke tᵣ. In dem dargestellten Beispiel wird der formbare einstellbare Mechanismus 11 laut Fig. 2 und 3 mit einem Paar Unterarme 12 und einem Paar Oberarme 13, verbunden durch Gelenke 14, gebildet. Die Grundplatte 10 ist mit Unterarmen 12 durch ein Paar Untergelenke 15 und die Gewindeplatte 7 mit Oberarmen 13 durch ein Paar Obergelenke 16 verbunden. Die Arme 12, 13 und die Gelenke 14, 15, 16 gestalten also gemeinsam mit der Gewindeplatte 7 und der Grundplatte 10 einen formbaren einstellbaren Sechsgelenk-Mechanismus 11.

Die eigentliche Fixierung der Klinke 1 erfolgt in der Form, dass die Klinke 1 mittels Befestigungsschrauben 4 über die Karosseriesäule 2 mit der Gewindeplatte 7 verbunden wird; sie wird durch die Grundplatte 10 an die Karosseriesäule 2 angeschweißt. Die Befestigungsschrauben 4 werden in Gewindebohrungen 8 (z. B. von Muttern 9) verschraubt, sie werden jedoch nicht fest angezogen. Durch Bewegung der Klinke 1 in die gewünschte Position kommt es zur Versetzung der Arme 12, 13 des formbaren einstellbaren Mechanismus 11 und gleichzeitig zu Verformungen in den Gelenken 14, 15, 16 des formbaren einstellbaren Mechanismus 11. In dieser Einstellphase bleibt die Gewindeplatte 7 bzw. die Klinke 1 in einer definierten Position gegenüber der Karosseriesäule 2 und der Grundplatte 10. Nach Beendigung der Bewegung der Klinke 1, d. h. nach ihrer Einstellung in die Endposition, die mit der Schlossposition übereinstimmt, wird ein Nachziehen der Befestigungsschrauben 4 durchgeführt.

Die eigene Steifheit des formbaren einstellbaren Mechanismus 11 bzw. seiner Gelenke 14, 15, 16, wo der formbare einstellbare Mechanismus 11 geschwächt wird, d. h. eine eindeutige Definition, wo und wie es zur Verformung und Biegung einzelner Teile des formbaren einstellbaren Mechanismus 11 kommt, ermöglicht es, dass das Einstellelement, in diesem Falle die Klinke 1, auch beim Einbau der Vorrichtung zur Aufnahme des Einstellelements 6 in die Karosserie in der vertikalen Lage in der versetzten Position bleibt, d. h. die Gravitation wird eliminiert und eigentliche Montage und Einstellung der Klinke 1. wird leichter.

Die Vorrichtung zur Aufnahme der Einstellelemente kann man überall dort einsetzen, wo eine Einstellung (Versetzung) der Elemente zur Aufnahme weiterer Komponenten zum Zweck der Einstellung, Begrenzung der Fertigungstoleranzen usw. notwendig ist.

### Auflistung der Hinweise

- 1: Klinke
- 2: Karosseriesäule
- 3: Befestigungsloch
- 4: Befestigungsschraube
- 5: Durchgangsloch
- 6: Vorrichtung zur Aufnahme des Einstellelements
- 7: Gewindeplatte
- 8: Gewindeloch
- 9: Mutter
- 10: Grundplatte
- 11: Unterarm
- 12: Oberarm
- 13: Gelenk
- 14: Untergelenk
- 15: Obergelenk
- tₖ: Gelenkstärke
- tᵣ: Armstärke

## Patentansprüche

1. Vorrichtung (6) zur Aufnahme von Einstellelementen, insbesondere einer Klinke (1), auf der Fahrzeugskarosserie zur Justierung der Einstellelemente, insbesondere einer Klinke (1), die Befestigungslöcher (3) aufweist,
wobei das Einstellelement mit Befestigungsschrauben (4), die durch Durchgangslöcher (5) in der Karosseriesäule (2) durchgehen, mit einer Gewindeplatte (7) der Vorrichtung verbunden ist, wobei
die Vorrichtung aus einer Grundplatte (10) besteht, die durch einen formbaren einstellbaren Mechanismus (11) mit der Gewindeplatte (7) verbunden ist, wobei die Gewindeplatte (7) mit Gewindelöchern (8) bzw. mit koaxial aufgenommenen Muttern (9) versehen ist,
wobei der formbare einstellbare Mechanismus (11) mindestens aus einem Unterarm (12) und einem Oberarm (13), die mit einem Gelenk (14) miteinander verbunden sind, besteht,
wobei der Unterarm (12) durch ein Untergelenk (15) mit der Grundplatte (10) und der Oberarm (13) durch ein Obergelenk (16) mit der Gewindeplatte (7) verbunden ist,
**dadurch gekennzeichnet,**
**dass** die Gelenkstärke (tₖ) kleiner als die Unter- oder Obergelenkarmstärke (tᵣ) ist.

## Claims

1. A device (6) for accommodating adjustment elements, in particular a latch (1), on the vehicle body for adjusting the adjustment element, in particular a latch (1) comprising fastening holes (3),
wherein the adjustment element is connected with fastening screws (4), which pass through through-holes (5) in the vehicle body column (2) to a threaded plate (7) of the device,
wherein the device comprises a base plate (10) which is connected to the threaded plate (7) by a deformable adjustable mechanism (11), wherein the threaded plate (7) is provided with threaded holes (8) and coaxially accommodated nuts (9),
wherein the deformable adjustable mechanism (11) consists of at least a lower arm (12) and an upper arm (13) which are connected to one another by means of a joint (14), wherein the lower arm (12) is connected to the base plate (10) by a lower joint (15) while the upper arm (13) is connected to the threaded plate (7) by an upper joint (16)
**characterized in that**
the joint strength (tₖ) is smaller than the lower or upper joint strength (tᵣ).

## Revendications

1. Dispositif (6) pour le logement d'éléments de réglage, plus particulièrement d'un cliquet (1), sur la carrosserie d'un véhicule pour l'ajustement des éléments de réglage, plus particulièrement d'un cliquet (1), qui comprend des trous de fixation (3),
l'élément de réglage étant relié avec une plaque filetée (7) du dispositif à l'aide de vis de fixation (4) qui traversent la colonne de carrosserie (2) en passant par des trous de passage (5),
le dispositif étant constitué d'une plaque de base (10) qui est reliée avec la plaque filetée (7) par l'intermédiaire d'un mécanisme façonnable réglable (11), la plaque filetée (7) étant munie de trous taraudés (8) ou d'écrous (9) logés de manière coaxiale,
le mécanisme façonnable réglable (11) étant constitué d'au moins un bras inférieur (12) et d'un bras supérieur (13), qui sont reliés entre eux à l'aide d'une articulation (14), le bras inférieur (12) étant relié par l'intermédiaire d'une articulation inférieure (15) avec la plaque de base (10) et le bras supérieur (13) étant relié par l'intermédiaire d'une articulation supérieure (16) avec la plaque filetée (7),
**caractérisé en ce que**
la résistance de l'articulation (tₖ) est inférieure à la résistance du bras d'articulation inférieur ou supérieur (tᵣ).
